# EUROPÄISCHE PATENTSCHRIFT

(11) **EP 2 576 253 B1**
(45) Veröffentlichungstag und Bekanntmachung des Hinweises auf die Patenterteilung: **23.04.2014**
(21) Anmeldenummer: 11725362.5
(22) Anmeldetag: 23.05.2011
(51) Int. Cl.: B60H 1/00

(54) **VERBESSERTE KLIMAANLAGENSTEUERUNG**
IMPROVED AIR CONDITIONING CONTROL
COMMANDE DE CLIMATISATION AMELIOREE

(30) Priorität: 27.05.2010 DE 102010029367
(43) Veröffentlichungstag der Anmeldung: 10.04.2013
(73) Patentinhaber: PREH GmbH, 97616 Bad Neustadt a.d. Saale (DE)
(72) Erfinder: REISER, Michael, 98669 Schackendorf (DE); BAUER, Georg, 97708 Bad Bocklet (DE)
(74) Vertreter: Lohmanns, Bernard
(86) Internationale Anmeldenummer: PCT/EP2011/058373
(87) Internationale Veröffentlichungsnummer: WO 2011/147779

(56) Entgegenhaltungen:
- EP-A1- 1 375 212
- EP-A2- 1 393 938

## Beschreibung

Die Erfindung betrifft ein verbessertes Verfahren zur Steuerung der Ventilatorleistung und der Klappenstellung einer Klimaanlage sowie eine entsprechend verbesserte Klimaanlage insbesondere für ein Kraftfahrzeug.

Bei der Fahrzeugklimatisierung wird die durch einen Ventilator beziehungsweise ein Gebläse geförderte Luftmenge mittels motorisch einstellbarer Klappen, die auch als Drosselklappen wirken, auf die einzelnen Auslassöffnungen eines Luftverteilungssystems verteilt. Es ist zur Komfortsteigerung angestrebt, die Luftverteilung und somit die Temperaturverteilung für die einzelnen Sitzpositionen oder die sogenannten Klimazonen in der Fahrgastzelle des Fahrzeugs trotz nur eines oder einer geringen Anzahl von Ventilatoren bzw. Gebläsen individuell einstellen zu können. Die Steuerung wird umso aufwändiger je mehr Klimazonen, d.h. gedachte Bereiche der Fahrgastzelle mit mehr oder weniger möglichst individueller Klimaeinstellung, vorgesehen sind. Diese Klimaeinstellung wird in der Regel an einem Bedienelement vorgenommen. Die Steuerungselektronik ermittelt aus diesen Sollwertvorgaben die für die jeweiligen Luftkanäle erforderliche Luftmengen und Lufttemperaturen, wobei letztere durch die Einstellungen von Luftmischklappen realisiert werden, die erhitzte oder gekühlte Luft einer Lufttemperiervorrichtung in das Luftverteilungssystem zuführen. Andererseits besteht das generelle Bestreben, das Gebläse auf ein energie- und geräuschoptimales Niveau einzuregeln. Eine modellbasierte Regelung für die Verteilung von Luftmassenströmen auf die einzelnen Luftauslässe ist aus der EP 1 669 226 A1 bekannt.

Eine weitere bekannte Regelung ist aus dem nächstliegenden Stand der Technik, Dokument EP 1 375 212 A1, bekannt.

Es ist dem Verdienst der Erfinder der vorliegenden Erfindung zuzurechnen, erkannt zu haben, dass eine Effizienzsteigerung bekannter Klimasteuerung möglich ist und durch geschickte Analyse der Luftmassenverteilung eine Steigerung der Steuerungsgeschwindigkeit erreicht wird, die vom Bediener positiv als Steigerung der Systemperformance wahrgenommen wird.

Die Aufgabe der vorliegenden Erfindung ist somit, die Effizienz, die Geräuschsentwicklung und Steuergeschwindigkeit bekannter Mehrzonen-Klimaanlagen beziehungsweise zugehöriger Steuerungsverfahren zu verbessern. Diese Aufgabe wird durch ein Steuerungsverfahren des Anspruchs 1 sowie durch eine Klimaanlage des nebengeordneten Anspruchs gelöst. Vorteilhafte Ausgestaltungen sind jeweils Gegenstand der abhängigen Ansprüche. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, charakterisiert und spezifiziert die Erfindung zusätzlich.

Die Erfindung betrifft ein Steuerungsverfahren für eine Klimaanlage eines Fahrzeugs, insbesondere Kraftfahrzeugs. Die dem Verfahren zugrunde liegende Klimaanlage weist Folgendes auf: einen Ventilator, bevorzugt ein Gebläse, beispielsweise einen Axial- oder Radialventilator; eine Temperiervorrichtung zur Temperierung der in den Ventilator bzw. in das Gebläse und/oder aus dem Ventilator bzw. Gebläse strömenden Luft; ein Luftverteilungssystem zur Verteilung des durch den Ventilator bzw. das Gebläse bewirkten Luftmassenstromes über mehrere Luftkanäle auf zugehörige Luftaustrittsöffnungen; mehrere motorisch stellbare Drosselklappen zur Beeinflussung des Strömungswiderstandes in den Luftkanälen und eine Steuerelektronik mit einer Bedieneinheit. Dabei sind die Begriffe Luftverteilungssystem und Luftkanäle weit auszulegen und umfassen hinsichtlich Materialauswahl und Formgebung jegliche technische sinnvolle Möglichkeit, die vom Fachmann beispielsweise unter Berücksichtigung der zur erzielenden Klimatisierungswirkung, wie Enteisung, und unter dem Gesichtspunkt Komfortgewinn und Dergleichen, in Erwägung gezogen wird.

Das erfindungsgemäße Verfahren sieht folgende Schritte vor: Auswerten der Einstellung der Bedieneinheit zur Bereitstellung von einstellungsspezifischen Luftmassenwerten für die einzelnen Luftkanäle und Selektion bestimmter Luftkanäle in Abhängigkeit der Einstellung an der Bedieneinheit; Bestimmen desjenigen Luftkanals mit dem größten Druckverlust bei ungedrosselter Stellung der zugehörigen motorisch stellbaren Drosselklappe aus den selektierten Luftkanälen; Ermitteln eines erforderlichen Vordrucks für den bestimmten Luftkanal mit dem größten, ungedrosselten Druckverlust und Steuerung der Ventilator- bzw. Gebläseleistung in Abhängigkeit des erforderlichen Vordrucks und in Abhängigkeit der Summe der Luftmassenwerte der selektierten Luftkanäle; Bestimmen der Drosselklappenstellungen der selektierten Luftkanäle anhand des einstellungsspezifischen Luftmassenwertes derart, dass sich der erforderliche Vordruck einstellt, wobei die Drosselklappenstellungen desjenigen Luftkanals aus den selektierten Luftkanälen mit dem größten, ungedrosselten Druckverlust die ungedrosselte Stellung ist; Stellen der Drosselklappen auf die zugehörigen, zuvor bestimmten Drosselklappenstellungen.

Erfindungsgemäß wird durch die erfindungsgemäße Herangehensweise eine besonders schnelle Steuerung erreicht, die vom Bediener positiv als ein spontanes Ansprechverhalten auf seine Bedieneingabe empfunden wird, was insbesondere von Vorteil ist, wenn das Klimatisierungssystem schnell auf wechselnde Sonneneinstrahlungsverhältnisse reagieren soll. Ferner wird durch die Abstimmung der Ventilator- bzw. Gebläseleistung auf den Luftkanal mit dem einstellungsabhängig größten Strömungswiderstand ein effizienter und geräuscharmer Betrieb und zudem eine feinere und breitere Stellmöglichkeit bei der Klimasteuerung erreicht. Das erfindungsgemäße Verfahren, bei dem erfindungsgemäß eben nicht unmittelbar aus den Einstellwerten der Bedieneinheit die Ventilator- bzw. Gebläseleistung ermittelt wird, sondern dieser Ermittlung die Ermittlung des erforderlichen Vordrucks vorgeschaltet ist, ermöglicht so eine vereinfachte Abstimmung, insbesondere bei einer Anpassung an unterschiedliche Fahrzeugplattformen. Die Klimaaggregatcharakteristik, d.h. die Charakteristik des Gebläses und der Temperiervorrichtung kann getrennt erfasst und in der Steuerungsabstimmung getrennt von der fahrzeugspezifischen Charakteristik des Luftführungssystems abgebildet werden. Deren Einflussparameter sind in den so "separierten" Systemen leichter zu erfassen und abzubilden, und es wird die softwaretechnische Umsetzung erleichtert.

Die erfindungsgemäß vorgesehenen Schritte können unter der Vorgabe, dass die Vordruckbestimmung vor der Steuerung des Ventilators auf die so vorgegebenen Vordruck erfolgt, zumindest teilweise zeitlich parallel, intermediär oder in einer anderen beliebigen technisch sinnvollen, zeitlichen Abfolge durchgeführt werden. Es obliegt dem Fachmann, den geeignetsten zeitlichen Ablauf der Schritte unter der zuvor beschriebenen Prämisse entsprechend dem erfindungsgemäßen Ziel eines schnellen Steuerungsverhaltens zu wählen.

Die Bestimmung der Drosselklappenstellung kann durch modellbasierte Regelung aber auch durch sensorbasierte Regelung erfolgen. Bevorzugt erfolgt die

Bestimmung der Drosselklappenstellung auf der Basis von in der Steuerelektronik gespeicherten Kennfeldern. Kennfelder stellen dabei Vorgabewerte in Abhängigkeit von Stellgrößen dar. Die Stellgrößen sind beispielsweise der bestimmte Vordruck und die gewünschte, per Bedieneinheit eingestellte Luftmengenwert oder daraus unmittelbar ableitbare Größen.

Erfindungsgemäß erfolgt in einer einfachen Ausgestaltung die Steuerung der Gebläse- bzw. Ventilatorleistung auch anhand eines Kennfeldes, indem beispielsweise die Ventilatorspannung anhand der Stellgrößen Vordruck und Gesamtluftmenge ermittelt werden.

Zu Erzielung einer exakteren Steuerung ist gemäß einer bevorzugten Ausführungsform eine Leistungsregelung des Ventilators bzw. Gebläses auf den erforderlichen Vordruck anhand eines mittels Sensors detektierten Drucks, insbesondere Vordrucks, im Luftkanalverteilungssystem vorgesehen. Dadurch kann die Steuergenauigkeit des erfindungsgemäßen Verfahrens verbessert werden.

Bei einer vorteilhaften Ausgestaltung des erfindungsgemäßen Verfahrens ist vorgesehen, dass die Klimaanlage händisch vom Bediener verstellbare Absperrklappen im Bereich der Luftaustrittsöffnungen der Luftkanäle umfasst, deren Stellung detektierbar ist und das Verfahren bei der Bestimmung desjenigen Luftkanals aus den selektierten Luftkanälen mit dem größten Druckverlust bei ungedrosselter Stellung der zugehörigen motorisch stellbaren Drosselklappe die Stellung der jeweils händisch vom Bediener verstellbaren Absperrklappe berücksichtigt. Die Detektion der Stellung der händisch verstellbaren Absperrklappen erfolgt durch eine im jeweiligen Luftkanal und/oder an der jeweiligen Klappe angeordnete Sensorik. Beispielsweise ist eine optische, magnetische und/oder eine elektromechanische Stellungserfassung vorgesehen. Da nicht ausgeschlossen werden kann, dass durch die händisch vorgenomme Absperrung Luft in die anderen ausgewählten Luftkanäle gedrückt wird und so dort die Luftmengen ansteigen, kann zur wenigstens teilweisen Kompensation bei dem erfindungsgemäßen Verfahren beispielsweise eine Neuermittlung des Druckverlusts der entsprechenden noch geöffneten Luftkanäle bzw. Ausströmer in der betroffenen Klimazone unter Berücksichtigung des erhöhten Luftmengenanteils der noch geöffneten Luftkanäle bzw. Ausströmer

(Störungsrechnung) mit der Stellung der Absperrklappe als jeweilige Störungsgröße durchgeführt werden.

Die Erfindung betrifft ferner eine Klimaanlage eines Fahrzeugs, insbesondere Kraftfahrzeugs, wobei die Klimaanlage Folgendes aufweist: einen Ventilator oder bevorzugt ein Gebläse, beispielsweise einen Axial- oder Radialventilator; eine Temperiervorrichtung zur Temperierung der in den Ventilator bzw. Gebläse und/oder aus dem Ventilator bzw. Gebläse strömenden Luft; ein Luftverteilungssystem zur Verteilung des durch den Ventilator bzw. das Gebläse bewirkten Luftmassenstromes über mehrere Luftkanäle auf zugehörige Luftaustrittsöffnungen; mehrere motorisch stellbare Drosselklappen zur Beeinflussung des Strömungswiderstandes in den Luftkanälen und eine Steuerelektronik mit einer Bedieneinheit.

Die Steuerelektronik ist erfindungsgemäß zur Durchführung der folgenden Schritte ausgelegt: Auswerten der Einstellung der Bedieneinheit zur Bereitstellung von einstellungsspezifischen Luftmassenwerten für die einzelnen Luftkanäle und Selektion bestimmter Luftkanäle in Abhängigkeit der Einstellung an der Bedieneinheit; Bestimmen desjenigen Luftkanals mit dem größten Druckverlust bei ungedrosselter Stellung der zugehörigen motorisch stellbaren Drosselklappe aus den selektierten Luftkanälen; Ermitteln eines erforderlichen Vordrucks für den bestimmten Luftkanal mit dem größten, ungedrosselten Druckverlust und Steuerung der Ventilator- bzw. Gebläseleistung in Abhängigkeit des erforderlichen Vordrucks und in Abhängigkeit der Summe der Luftmassenwerte der selektierten Luftkanäle; Bestimmen der Drosselklappenstellungen der selektierten Luftkanäle anhand des einstellungsspezifischen Luftmassenwertes derart, dass sich der erforderliche Vordruck einstellt, wobei die Drosselklappenstellungen desjenigen Luftkanals aus den selektierten Luftkanälen mit dem größten, ungedrosselten Druckverlust die ungedrosselte Stellung ist; Stellen der Drosselklappen auf die zugehörigen, zuvor bestimmten Drosselklappenstellungen.

Durch die erfindungsgemäße Auslegung der Steuerungselektronik wird eine besonders schnelle Steuerung erreicht, die vom Bediener positiv als ein spontanes Ansprechverhalten auf seine Bedieneingabe empfunden wird, was insbesondere von Vorteil ist, wenn das System schnell auf wechselnde Sonneneinstrahlungsverhältnisse reagieren soll. Ferner wird durch die Abstimmung der Ventilatorleistung auf den Luftkanal mit dem einstellungsabhängig größten Strömungswiderstand ein effizienter und geräuscharmer Betrieb und zudem eine feinere und breitere Stellmöglichkeit bei der Klimasteuerung erreicht. Das erfindungsgemäße Verfahren, bei dem eben nicht unmittelbar aus den Einstellwerten der Bedieneinheit die Ventilator- bzw. Gebläseleistung ermittelt wird, sondern dieser Ermittlung die Ermittlung des erforderlichen Vordrucks vorgeschaltet ist, ermöglicht so eine vereinfachte Abstimmung, insbesondere bei einer Anpassung an unterschiedliche Fahrzeugplattformen. Die Klimaaggregatcharakteristik, d.h. die Charakteristik des Gebläses und der Temperiervorrichtung kann getrennt erfasst und in der Steuerungsabstimmung getrennt von der fahrzeugspezifischen Charakteristik des Luftführungssystems abgebildet werden. Deren Einflussparameter sind in den so "separierten" Systemen leichter zu erfassen und abzubilden, und es wird die softwaretechnische Umsetzung erleichtert.

Bevorzugt und in Verbindung mit den zuvor angegebenen technischen Vorteilen ist die Steuerelektronik ausgelegt, die Drosselklappenstellung auf der Basis von in der Steuerelektronik gespeicherten Kennfeldern zu bestimmen.

Gemäß einer weiteren vorteilhaften Ausgestaltung ist ferner ein Drucksensor zur Detektion eines Druckes, insbesondere des Vordrucks, im Luftverteilungssystem vorgesehen und ist die Steuerungselektronik ausgelegt, die Gebläse- bzw. Ventilatorleistung anhand eines mittels Drucksensor detektierten Drucks auf den erforderlichen Vordruck einzuregeln.

Bevorzugt weist die Klimaanlage händisch vom Bediener verstellbare Absperrklappen im Bereich der Luftaustrittsöffnungen der Luftkanäle auf, deren Stellung detektierbar ist, wobei die Steuerungselektronik ausgelegt ist, bei der Bestimmung desjenigen Luftkanals aus den selektierten Luftkanälen mit dem größten Druckverlust bei ungedrosselter Stellung der zugehörigen motorisch stellbaren Drosselklappe die Stellung der jeweils händisch vom Bediener verstellbaren Absperrklappe zu berücksichtigen.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Es zeigt schematisch:

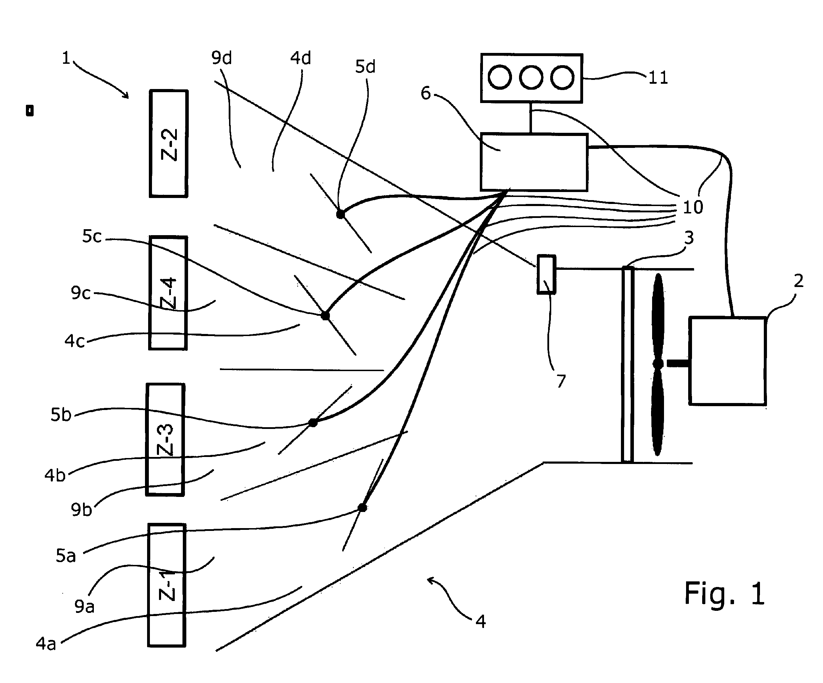

- Fig. 1:: eine vereinfachte Prinzipdarstellung einer erfindungsgemäßen Klimaanlage 1.

Die erfindungsgemäße Klimaanlage 1 umfasst einen Ventilator 2 sowie eine Temperiervorrichtung 3 zur Temperierung des vom Ventilator erzeugten Luftstroms. Dieser temperierte Luftstrom wird über ein Luftverteilungssystem 4 auf die 4 Zonen Z-1, Z-2, Z-3, Z-4 einer Fahrgastzelle eines Kraftfahrzeugs verteilt. Das Luftverteilungssystem weist zur Verteilung des Luftstroms 4 Luftkanäle 4a- 4d auf, die über die Austrittsöffnungen 9a-9d in die jeweiligen Zonen enden. Es ist in jedem Luftkanal 4a-4d wenigstens eine motorisch stellbare Drosselklappe 5a-5d zur Regelung des zugehörigen Luftstroms bzw. zur Beeinflussung des Strömungswiderstandes in dem betreffenden Luftkanal 4a-4d vorgesehen. Jede motorisch stellbare Drosselklappe 5a-5d erhält ihren Stellsollwert über eine elektrische Leitung von einer Steuerelektronik 6. Die Steuerelektronik 6 ist ferner über eine elektrische Leitung 10 mit einer Bedieneinheit 11 zur Eingabe von klimaspezifischen Sollwerten verbunden. Über eine Leitung 10 ist ferner ein Drucksensor 7 zur Bestimmung des Vordrucks in dem Luftverteilungssystem 4 verbunden. Die Steuerelektronik 6 ist durch elektronische und/oder softwaretechnische Auslegung ausgelegt, wenigstens Folgende Schritte durchzuführen:

Auswerten der Einstellung der Bedieneinheit 11 zur Bereitstellung von einstellungsspezifischen Luftmassenwerten für die einzelnen Luftkanäle 4a-4d und Selektion bestimmter Luftkanäle 4a-4d in Abhängigkeit der Einstellung,h. es werden bestimmte der vier Luftkanäle ausgewählt und Luftmassensollwerte für die Kanäle vorgegeben;
Bestimmen desjenigen Luftkanals 4a-4d mit dem größten Druckverlust bei ungedrosselter Stellung der zugehörigen motorisch stellbaren Drosselklappe 5a-5d aus den selektierten Luftkanälen 4a-4d beispielsweise anhand von Kennfeldern, die in der Steuerelektronik hinterlegt sind;
Ermitteln eines erforderlichen Vordrucks (Vordrucksollwert) für den bestimmten Luftkanal (4a-4d) mit dem größten, ungedrosselten Druckverlust;
Steuerung der Leistung des Ventilators 2 in Abhängigkeit des erforderlichen Vordrucks und in Abhängigkeit der Summe der Luftmassenwerte der selektierten Luftkanäle 4a-4d;
Bestimmen der Stellung der Drosselklappen 5a-5d der selektierten Luftkanäle 4a-4d anhand des einstellungsspezifischen Luftmassenwertes derart, dass sich der erforderliche Vordruck (Vordrucksollwert) einstellt, wobei die Stellung der Drosselklappen 5a-5d desjenigen Luftkanals 4a-4d aus den selektierten Luftkanälen mit dem größten, ungedrosselten Druckverlust die ungedrosselte Stellung ist;
Stellen der Drosselklappen (5a-5d) auf die zugehörigen, zuvor bestimmten Drosselklappenstellungen.

## Patentansprüche

1. Steuerungsverfahren für eine Klimaanlage (1) eines Fahrzeugs, insbesondere Kraftfahrzeugs, wobei die Klimaanlage Folgendes aufweist:
einen Ventilator (2);
eine Temperiervorrichtung (3) zur Temperierung der in den Ventilator (2) und/oder aus dem Ventilator (2) strömenden Luft;
ein Luftverteilungssystem (4) zur Verteilung des durch den Ventilator (2) bewirkten Luftmassenstromes über mehrere Luftkanäle (4a-4d) auf zugehörige Luftaustrittsöffnungen (9a-9d);
mehrere motorisch stellbare Drosselklappen (5a-5d) zur Beeinflussung des Strömungswiderstandes in den Luftkanälen (4a-4d); und
eine Steuerelektronik (6) mit einer Bedieneinheit (11),
wobei das Verfahren Folgendes umfasst:
i) Auswerten der Einstellung der Bedieneinheit (11) zur Bereitstellung von einstellungsspezifischen Luftmassenwerten für die einzelnen Luftkanäle (4a-4d) und Selektion bestimmter Luftkanäle (4a-4d) in Abhängigkeit der Einstellung;
ii) Bestimmen desjenigen Luftkanals (4a-4d) mit dem größten Druckverlust bei ungedrosselter Stellung der zugehörigen motorisch stellbaren Drosselklappe (5a-5d) aus den selektierten Luftkanälen (4a-4d), wobei das Bestimmen anhand von in der Steuerelektronik hinterlegten Kennfeldern erfolgt;
iii) Ermitteln eines erforderlichen Vordrucks für den bestimmten Luftkanal (4a-4d) mit dem größten, ungedrosselten Druckverlust;
iv) Steuerung der Ventilatorleistung in Abhängigkeit des erforderlichen Vordrucks und in Abhängigkeit der Summe der Luftmassenwerte der selektierten Luftkanäle (4a-4d);
v) Bestimmen der Drosselklappenstellungen der selektierten Luftkanäle (4a-4d) anhand des einstellungsspezifischen Luftmassenwertes derart, dass sich der erforderliche Vordruck einstellt, wobei die Drosselklappenstellung des bestimmten Luftkanals die ungedrosselte Stellung ist;
vi) Stellen der Drosselklappen (5a-5d) auf die zugehörigen, zuvor bestimmten Drosselklappenstellungen.

2. Steuerungsverfahren gemäß Anspruch 1, wobei die Bestimmung der Drosselklappenstellung auf der Basis von in der Steuerelektronik gespeicherten Kennfeldern erfolgt.

3. Steuerungsverfahren gemäß einem der vorhergehenden Ansprüche, wobei die Steuerung der Ventilatorleistung durch eine Regelung des Ventilators (2) auf den erforderlichen Vordruck anhand eines mittels Sensors (7) detektierten Drucks, insbesondere Vordrucks, im Luftkanalverteilungssystem (4) erfolgt.

4. Steuerungsverfahren gemäß einem der vorhergehenden Ansprüche, wobei die Klimaanlage (1) händisch vom Bediener verstellbare Absperrklappen im Bereich der Luftaustrittsöffnungen der Luftkanäle umfasst, deren Stellung detektiert wird und bei der Bestimmung desjenigen Luftkanals aus den selektierten Luftkanälen mit dem größten Druckverlust bei ungedrosselter Stellung der zugehörigen motorisch stellbaren Drosselklappe die Stellung der jeweils händisch vom Bediener verstellten Absperrklappe berücksichtigt wird.

5. Klimaanlage (1) eines Fahrzeugs, insbesondere Kraftfahrzeugs, wobei die Klimaanlage Folgendes aufweist:
einen Ventilator (2);
eine Temperiervorrichtung (3) zur Temperierung der in den Ventilator (2) und/oder aus dem Ventilator (2) strömenden Luft;
ein Luftverteilungssystem (4) zur Verteilung des durch den Ventilator bewirkten Luftmassenstromes über mehrere Luftkanäle (4a-4d) auf zugehörige Luftaustrittsöffnungen (9a-9d);
mehrere motorisch stellbare Drosselklappen (5a-5d) zur Beeinflussung des Strömungswiderstandes in den Luftkanälen (4a-4d); und
eine Steuerelektronik (6) mit einer Bedieneinheit (11),
wobei die Steuerelektronik (6) ausgelegt ist, folgende Verfahrensschritte durchzuführen:
i) Auswerten der Einstellung der Bedieneinheit (11) zur Bereitstellung von einstellungsspezifischen Luftmassenwerten für die einzelnen Luftkanäle und Selektion bestimmter Luftkanäle (4a-4d) in Abhängigkeit der Einstellung;
ii) Bestimmen desjenigen Luftkanals aus den selektierten Luftkanälen (4a-4d) mit dem größten, ungedrosselten Druckverlust, wobei das Bestimmen anhand von in der Steuerelektronik hinterlegten Kennfeldern erfolgt;
iii) Ermitteln eines erforderlichen Vordrucks für den bestimmten Luftkanal (4a-4d) mit dem größten, ungedrosselten Druckverlust;
iv) Steuerung der Ventilatorleistung in Abhängigkeit des erforderlichen Vordrucks und in Abhängigkeit der Summe der Luftmassenwerte der selektierten Luftkanäle (4a-4d);
v) Bestimmen der Drosselklappenstellungen der selektierten Luftkanäle (4a-4d) anhand des einstellungsspezifischen Luftmassenwertes derart, dass sich der erforderliche Vordruck einstellt, wobei die Drosselklappenstellung des bestimmten Luftkanals (4a-4d) die ungedrosselte Stellung ist;
vi) Stellen der Drosselklappen (5a-5d) auf die zugehörigen, zuvor bestimmten Drosselklappenstellungen.

6. Klimaanlage (1) gemäß Anspruch 5, wobei die Steuerelektronik (6) ausgelegt ist, die Drosselklappenstellung auf der Basis von in der Steuerelektronik (6) gespeicherten Kennfeldern zu bestimmen.

7. Klimaanlage (1) gemäß einem der vorhergehenden Ansprüche 5 oder 6, ferner umfassend einen Drucksensor (7) zur Detektion eines Druckes, insbesondere des Vordrucks, im Luftverteilungssystem (4) und wobei die Steuerungselektronik (6) ausgelegt ist, die Ventilatorleistung anhand eines mittels des Drucksensors (7) detektierten Drucks auf den erforderlichen Vordruck einzuregeln.

8. Klimaanlage(1) gemäß einem der vorhergehenden Ansprüche, wobei die Klimaanlage (1) händisch vom Bediener verstellbare Absperrklappen im Bereich der Luftaustrittsöffnungen der Luftkanäle (4a-4d) umfasst, deren Stellung detektiert wird und die Steuerungselektronik ausgelegt ist, bei der Bestimmung desjenigen Luftkanals aus den selektierten Luftkanälen (4a-4d) mit dem größten Druckverlust bei ungedrosselter Stellung der zugehörigen motorisch stellbaren Drosselklappe (5a-5d) die Stellung der jeweils händisch vom Bediener verstellten Absperrklappe zu berücksichtigen.

## Claims

1. A controlling method for an air-conditioning system (1) of a vehicle, particularly a motor vehicle, the air-conditioning system comprising the following:
a fan (2);
a temperature-regulating device (3) for regulating the temperature of the air flowing into the fan (2) and/or out of the fan (2);
an air distribution system (4) for distributing the air mass flow caused by the fan (2) via several air ducts (4a-4d) to associated air outlets (9a-9d);
several motor-adjustable throttle valves (5a-5d) for influencing the flow resistance in the air ducts (4a-4d); and
an electronic control system (6) having an operating unit (11),
the method comprising the following:
i) evaluating the setting of the operating unit (11) for providing setting-specific air mass values for the individual air ducts (4a-4d) and selection of certain air ducts (4a-4d) depending on the setting;
ii) determining the air duct (4a-4d) from among the selected air ducts (4a-4d) that has the largest pressure loss in the non-throttled position of the associated motor-adjustable throttle valve (5a-5d), wherein the determination is carried out with reference to characteristics deposited in the electronic control system;
iii) determining a required admission pressure for the determined air duct (4a-4d) having the largest non-throttled pressure loss;
iv) controlling the fan performance depending on the required admission pressure and depending on the sum of the air mass values of the selected air ducts (4a-4d);
v) determining the throttle valve position of the selected air ducts (4a-4d) based on the setting-specific air mass value in such a way that the required admission pressure is reached, wherein the throttle valve position of the determined air duct is the non-throttled position;
vi) setting the throttle valves (5a-5d) to the associated, previously determined throttle valve positions.

2. The controlling method according to claim 1, wherein the determination of the throttle valve position takes place based on characteristics stored in the electronic control system.

3. The controlling method according to any one of the preceding claims, wherein the control of the fan performance takes place by a regulation of the fan (2) to the required admission pressure based on a pressure, in particular admission pressure, in the air duct distribution system (4) detected by means of a sensor (7).

4. The controlling method according to any one of the preceding claims, wherein the air-conditioning system (1) comprises shut-off valves in the region of the air outlets of the air ducts, which are manually adjustable by the operator and whose position is detected, and the position of the shut-off valve respectively adjusted manually by the operator is taken into account in the determination of the air duct from among the selected air ducts that has the largest pressure loss in the non-throttled position of the associated motor-adjustable throttle valve.

5. An air-conditioning system (1) of a vehicle, particularly a motor vehicle, the air-conditioning system comprising the following:
a fan (2);
a temperature-regulating device (3) for regulating the temperature of the air flowing into the fan (2) and/or out of the fan (2);
an air distribution system (4) for distributing the air mass flow caused by the fan via several air ducts (4a-4d) to associated air outlets (9a-9d);
several motor-adjustable throttle valves (5a-5d) for influencing the flow resistance in the air ducts (4a-4d); and
an electronic control system (6) having an operating unit (11),
the electronic control system (6) being designed to carry out the following method steps:
i) evaluating the setting of the operating unit (11) for providing setting-specific air mass values for the individual air ducts and selection of certain air ducts (4a-4d) depending on the setting;
ii) determining the air duct from among the selected air ducts (4a-4d) that has the largest non-throttled pressure loss, wherein the determination is carried out with reference to characteristics deposited in the electronic control system;
iii) determining a required admission pressure for the determined air duct (4a-4d) having the largest non-throttled pressure loss;
iv) controlling the fan performance depending on the required admission pressure and depending on the sum of the air mass values of the selected air ducts (4a-4d);
v) determining the throttle valve position of the selected air ducts (4a-4d) based on the setting-specific air mass value in such a way that the required admission pressure is reached, wherein the throttle valve position of the determined air duct (4a-4d) is the non-throttled position;
vi) setting the throttle valves (5a-5d) to the associated, previously determined throttle valve positions.

6. The air-conditioning system (1) according to claim 5, wherein the electronic control system (6) is designed to determine the throttle valve position based on characteristics stored in the electronic control system (6).

7. The air-conditioning system (1) according to any one of the preceding claims 5 or 6, moreover comprising a pressure sensor (7) for detecting a pressure, in particular an admission pressure, in the air distribution system (4), and wherein the electronic control system (6) is designed to regulate the fan performance to the required admission pressure based on a pressure detected by means of the pressure sensor (7).

8. The air-conditioning system (1) according to any one of the preceding claims, wherein the air-conditioning system (1) comprises shut-off valves in the region of the air outlets of the air ducts (4a-4d), which are manually adjustable by the operator and whose position is detected, and the electronic control system is designed to take into account the position of the shut-off valve respectively adjusted manually by the operator in the determination of the air duct from among the selected air ducts (4a-4d) that has the largest pressure loss in the non-throttled position of the associated motor-adjustable throttle valve (5a-5d).

## Revendications

1. Procédé de commande pour une installation de conditionnement d'air (1) d'un véhicule, en particulier véhicule automobile, ladite installation de conditionnement d'air comprenant :
un ventilateur (2);
un dispositif de thermorégulation (3) destiné à tempérer l'air entrant dans ledit ventilateur (2) et/ou sortant du ventilateur (2);
un système de distribution d'air (4) destiné à distribuer le courant de masse d'air provoqué par le ventilateur (2), par plusieurs canaux d'air (4a-4d) à des orifices de sortie d'air (9a-9d) associés;
une pluralité de clapets d'étranglement (5a-5d) réglables par moteur et destinés à influencer la résistance à l'écoulement dans lesdits canaux d'air (4a-4d); et
une électronique de commande (6) comprenant une unité de manoeuvre (11),
ledit procédé comprenant :
i) l'évaluation du réglage de ladite unité de manoeuvre (11) pour fournir des valeurs de masse d'air spécifiques au réglage pour les canaux d'air (4a-4d) individuels, et la sélection de certains canaux d'air (4a-4d) en fonction du réglage;
ii) la détermination, parmi lesdits canaux d'air (4a-4d) sélectionnés, du canal d'air (4a-4d) qui présente la perte de charge la plus importante dans la position non étranglée du clapet d'étranglement (5a-5d) associé réglable par moteur, la détermination se faisant à partir de champs caractéristiques mémorisés dans ladite électronique de commande;
iii) la détermination d'une pression préalable nécessaire pour le canal d'air (4a-4d) déterminé ayant la plus grande perte de charge non réduite;
iv) la commande de la puissance du ventilateur en fonction de la pression préalable nécessaire et en fonction de la somme des valeurs de masse d'air des canaux d'air (4a-4d) sélectionnés;
v) la détermination des positions des clapets d'étranglement des canaux d'air (4a-4d) sélectionnés, à partir de la valeur de masse d'air spécifique au réglage, de telle sorte que ladite pression préalable nécessaire s'établisse, la position de clapet d'étranglement du canal d'air déterminé étant la position non étranglée;
vi) le réglage des clapets d'étranglement (5a-5d) aux positions de clapet d'étranglement associées déterminées auparavant.

2. Procédé de commande selon la revendication 1, dans lequel la détermination de la position de clapet d'étranglement se fait sur la base de champs caractéristiques mémorisés dans ladite électronique de commande.

3. Procédé de commande selon l'une quelconque des revendications précédentes, dans lequel la commande de la puissance du ventilateur est réalisée par un réglage du ventilateur (2) à la pression préalable nécessaire, à partir d'une pression, en particulier pression préalable, détectée au moyen d'un capteur (7), dans le système de distribution à canaux d'air (4).

4. Procédé de commande selon l'une quelconque des revendications précédentes, dans lequel ladite installation de conditionnement d'air (1) comprend des clapets d'arrêt réglables manuellement par l'utilisateur, au niveau des orifices de sortie d'air des canaux d'air, dont la position est détectée, et la position du clapet d'arrêt réglé respectivement manuellement par l'utilisateur est prise en compte dans la détermination du canal d'air parmi lesdits canaux d'air sélectionnés qui présente la plus grande perte de charge dans la position non étranglée du clapet d'étranglement associé réglable par moteur.

5. Installation de conditionnement d'air (1) d'un véhicule, en particulier véhicule automobile, ladite installation de conditionnement d'air comprenant :
un ventilateur (2);
un dispositif de thermorégulation (3) destiné à tempérer l'air entrant dans ledit ventilateur (2) et/ou sortant du ventilateur (2);
un système de distribution d'air (4) destiné à distribuer le courant de masse d'air provoqué par le ventilateur, par plusieurs canaux d'air (4a-4d) à des orifices de sortie d'air (9a-9d) associés;
une pluralité de clapets d'étranglement (5a-5d) réglables par moteur et destinés à influencer la résistance à l'écoulement dans lesdits canaux d'air (4a-4d); et
une électronique de commande (6) comprenant une unité de manoeuvre (11),
ladite électronique de commande (6) étant adaptée pour mettre en oeuvre les étapes de procédé suivantes :
i) l'évaluation du réglage de ladite unité de manoeuvre (11) pour fournir des valeurs de masse d'air spécifiques au réglage pour les canaux d'air individuels, et la sélection de certains canaux d'air (4a-4d) en fonction du réglage;
ii) la détermination, parmi lesdits canaux d'air (4a-4d) sélectionnés, du canal d'air qui présente la plus grande perte de charge non réduite, la détermination se faisant à partir de champs caractéristiques mémorisés dans ladite électronique de commande;
iii) la détermination d'une pression préalable nécessaire pour le canal d'air (4a-4d) déterminé ayant la plus grande perte de charge non réduite;
iv) la commande de la puissance du ventilateur en fonction de la pression préalable nécessaire et en fonction de la somme des valeurs de masse d'air des canaux d'air (4a-4d) sélectionnés;
v) la détermination des positions des clapets d'étranglement des canaux d'air (4a-4d) sélectionnés, à partir de la valeur de masse d'air spécifique au réglage, de telle sorte que ladite pression préalable nécessaire s'établisse, la position de clapet d'étranglement du canal d'air (4a-4d) déterminé étant la position non étranglée;
vi) le réglage des clapets d'étranglement (5a-5d) aux positions de clapet d'étranglement associées déterminées auparavant.

6. Installation de conditionnement d'air (1) selon la revendication 5, dans laquelle ladite électronique de commande (6) est adaptée pour déterminer la position de clapet d'étranglement sur la base de champs caractéristiques mémorisés dans l'électronique de commande (6).

7. Installation de conditionnement d'air (1) selon l'une quelconque des revendications précédentes 5 ou 6, comprenant en outre un capteur de pression (7) destiné à détecter une pression, en particulier la pression préalable, dans le système de distribution d'air (4), et dans laquelle ladite électronique de commande (6) est adaptée pour régler la puissance du ventilateur, à partir d'une pression détectée au moyen dudit capteur de pression (7), à la pression préalable nécessaire.

8. Installation de conditionnement d'air (1) selon l'une quelconque des revendications précédentes, ladite installation de conditionnement d'air (1) comprenant des clapets d'arrêt réglables manuellement par l'utilisateur, au niveau des orifices de sortie d'air des canaux d'air (4a-4d), dont la position est détectée, et ladite électronique de commande étant adaptée pour prendre en compte la position du clapet d'arrêt réglé respectivement manuellement par l'utilisateur, dans la détermination du canal d'air parmi lesdits canaux d'air (4a-4d) sélectionnés qui présente la plus grande perte de charge dans la position non étranglée du clapet d'étranglement (5a-5d) associé réglable par moteur.
